# EUROPEAN PATENT SPECIFICATION

(11) **EP 3 012 098 B1**
(45) Date of publication and mention of the grant of the patent: **29.12.2021**
(21) Application number: 15186828.8
(22) Date of filing: 25.09.2015
(51) Int. Cl.: B32B 5/00, B32B 5/02, B32B 5/04, B32B 5/10, B32B 9/00, B32B 9/04, B32B 15/00, B32B 15/04, B32B 19/00, B32B 19/02, B32B 19/04, B32B 27/00, B32B 27/06, B32B 27/08, B32B 27/28, B65D 88/14

(54) **FIRE-RETARDING APPARATUS AND METHODS OF THEIR MANUFACTURE**
FLAMMHEMMENDE VORRICHTUNG UND VERFAHREN ZU DEREN HERSTELLUNG
APPAREIL COUPE-FEU ET LEURS PROCÉDÉS DE FABRICATION

(30) Priority: 24.10.2014 US 201414523741
(43) Date of publication of application: 27.04.2016
(73) Proprietor: The Boeing Company, Chicago, IL 60606-1596 (US)
(72) Inventor: HARIRAM, Sham S, Seattle, WA 98119 (US)
(74) Representative: Plasseraud IP

(56) References cited:
- EP-A1- 0 520 745
- EP-A2- 2 853 508
- CN-A- 1 923 637
- US-A- 4 100 860
- None

## Description

### FIELD OF THE DISCLOSURE

This disclosure relates to fire-retarding apparatus comprising composites and to their methods of manufacture.

### BACKGROUND

It is sometimes needed to make apparatus fire-retarding. This is often done using heavy metal construction using materials such as Steel, Titanium, Inconel, and other materials. However, use of such materials increases weight and expense. This is an important issue in the aircraft industry where weight and cost reduction is needed.

According to EP 2 853 508 A2, a fire-retaining container includes a first fire-retarding layer and a second fire-retarding layer connected to the first fire-retarding layer. Another fire-retaining container includes a fire-retarding layer and a reinforcement material reinforcing the fire-retarding layer. A method of containing an item is also discussed. In one step, an item is covered with a fire-retaining container. The fire-retaining container comprises: a first fire-retarding layer and a second fire-retarding layer connected to the first fire-retarding layer; or a fire-retarding layer and a reinforcement material reinforcing the fire-retarding layer.

According to EP 0 520 745 A1, an air cargo container comprises a base, side walls and a roof, the side walls and roof being made of panels of a composite structural sheet material which is capable of sustaining the tensile, compressive and shear loads to be carried by the container, the panels being connected together and to the base along their edges in the absence of a structural framework. The composite structural material comprises three layers, a core layer of a closed cell foam and outer structural layers comprising thermo-setting plastics sheet material and aluminium alloy sheet material. At least some of the side walls are vertical and planar over their entire extents and, at their lower edges, are surrounded by a laterally projecting flange for use in anchoring the container in the cargo hold.

According to US 4 100 860 A, A shipping container overpack for safe transportation of radioactive and other hazardous materials provides a leakproof receptacle for containing and protecting the material to be shipped against accidental release and dispersal into the surrounding environment. The receptacle is of conventional size and shape for shipping containers and has spaced inner and outer shells with a layer of foamed polyurethane occupying the space therebetween to provide sealing, insulation and reinforcement. A method of fabricating the receptacle is also discussed in which a liquid isocyanate is mixed with a liquid curing agent and a liquid blowing agent and poured into the space between the inner and outer shell.

According to CN 1 923 637 A, plastic storage containers are discussed, having a multilayer structure, wherein the outer layer is configured to include one or more heat-resistant material flame effect fire protection layer. The fire plastic layer may contain halogen such as fluorine, chlorine, bromine or iodine. Further, the fire barrier layer may be a polymeric plastic, the polymeric plastic of the housing is formed noncombustible under the action of heat. Further, the fire barrier layer may be a plastic container comprising a plastic heat nanoparticles red phosphorus or one or ceramics such as graphite, expanded configuration. Finally, the fire protection layer can be configured to be connected to the fire barrier layer of the multilayer material. For containers having a tray and a plastic container of the grate casing, the outer layer of fireproof and flame resistant container casing made of sheet material loaded grate casing joint provides effective protection of the flame-resistant effect.

A fire-retarding apparatus and method of manufacture is needed to resolve one or more issues of one or more current fire-retarding apparatus or methods of manufacture.

### SUMMARY

In one embodiment, a fire-retarding apparatus is disclosed. The fire-retarding apparatus includes a composite. The composite includes a face layer attached to a fire-retarding layer.

In another embodiment, a fire-retarding apparatus is disclosed. The fire-retarding apparatus includes a composite. The composite includes a face layer, a fire-retarding layer, a fire-retarding attachment member or fire-retarding attachment layer attaching the face layer to the fire-retarding layer, and a reinforcing layer attached to the fire-retarding layer or reinforcing material embedded in the fire-retarding layer.

In still another embodiment, a method of manufacturing a fire-retarding apparatus is disclosed. A fire-retarding layer is attached to a face layer to form a composite.

### BRIEF DESCRIPTION OF THE DRAWINGS

The disclosure can be better understood with reference to the following drawings and description. The components in the figures are not necessarily to scale, emphasis instead being placed upon illustrating the principles of the disclosure.
Figure 1 illustrates a perspective view of a fire-retarding apparatus;
Figure 2 illustrates a cross-section view through line 2-2 of the fire-retarding apparatus of Figure 1;
Figure 3 illustrates an example of a cross-section view through line 2-2 in the fire-retarding apparatus of Figure 1;
Figure 4 illustrates still another example of a cross-section view through line 2-2 in the fire-retarding apparatus of Figure 1;
Figure 5 illustrates yet another example of a cross-section view through line 2-2 in the fire-retarding apparatus of Figure 1; and
Figure 6 is a flowchart illustrating one embodiment of a method of manufacturing a fire-retarding apparatus comprising a composite.

### DETAILED DESCRIPTION

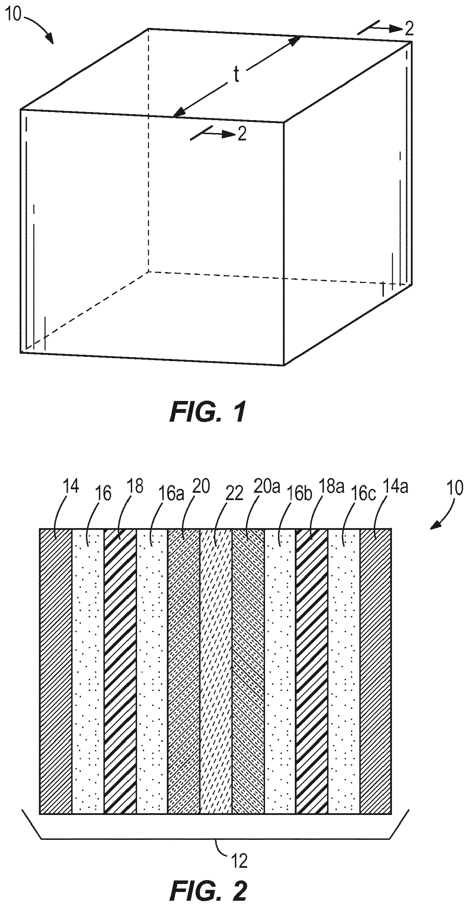

Figure 1 illustrates a perspective view of a fire-retarding apparatus 10. The fire-retarding apparatus 10 may comprise a portion of an aircraft, a portion of a spacecraft, a portion of a vehicle, or another type of apparatus for which it is desired to be fire-retarding. For instance, in an aircraft, the fire-retarding apparatus 10 may comprise any portion of the aircraft which needs to be made fire-retarding such as the engine cowling, a nacelle which holds the engine, a cargo compartment, a housing which holds an airplane component, a skin of the aircraft, a fuselage, or another portion of the aircraft. In other embodiments, the fire-retarding apparatus 10 may further vary. The fire-retarding apparatus 10 may weigh less than 100 pounds per square foot (488 kilogram per square meter), and may have a thickness t (shown in Figure 2) of less than 3 feet (0.9 meter). In other embodiments, the fire-retarding apparatus 10 may weigh less than 1 pound per square foot (0.5 gram per square meter), and may have a thickness t (shown in Figure 2) of less than 0.2 meters (8 inches). In still other embodiments, the weight and thickness of the fire-retarding apparatus 10 may vary further.

Figure 2 illustrates a cross-section view through line 2-2 of the fire-retarding apparatus 10 of Figure 1. The fire-retarding apparatus 10 may comprise a composite 12. The composite 12 may comprise the following attached layers: face layer 14; fire-retarding attachment layer 16; reinforcing layer 18; fire-retarding attachment layer 16a; fluid-repelling layer 20; fire-retarding layer 22; fluid-repelling layer 20a; fire-retarding attachment layer 16b; reinforcing layer 18a; fire-retarding attachment layer 16c; and face layer 14a. In other embodiments, any of the layers may vary in order or number, one or more of the layers may not be present, or one or more additional layers may be used. In still other embodiments, the fire-retarding apparatus 10 may consist of any combination of the layers including all of the layers or taking away one or more of the layers.

The face layers 14 and 14a may comprise non-fire-retarding layers. The face layers may comprise sheets of aluminum, composite, metal, non-metallic, polyimide, fluid repelling, or another type of material. In other embodiments, the face layers 14 and 14a may be made of any type of non-fire-retarding or fire-retarding material.

The fire-retarding attachment layers 16, 16a, 16b, and 16c may be used to adhere the layers disposed on opposite sides of them together, using a material which is fire-retarding. For purposes of this disclosure, the term "fire-retarding" means that the layer or member is made of a material which retards fire, or which doesn't ignite or contains the fire, which prevents the fire from spreading or penetrating through, and which either suppresses the fire or extinguishes it through containment and/or lack of oxygen. The fire-retarding attachment layers 16, 16a, 16b, and 16c may comprise an adhesive, paste, solid, or another adhering material which is fire-retarding. The fire-retarding attachment layers 16, 16a, 16b, and 16c may be made of ceramic, metal, non-metallic, composite, Aramid, aerogel, or polyimide. In other embodiments, the fire-retarding attachment layers 16, 16a, 16b, and 16c may be made of varying materials which both adhere the layers disposed on opposite sides of them together, and are fire-retarding having fire retarding properties equivalent to Underwriter Laboratories (UL) Rating of UL-94 V-0 (does not burn) with an operating temperature range of -452 degrees F to 3,600 degrees F. In additional embodiments, the fire-retarding attachment layers 16, 16a, 16b, and 16c may survive a fire of 2,000 degrees Fahrenheit minimum (1093 degrees Celsius) for 15 minutes without burning through and without burning the back or front sides. In still other embodiments, the fire-retarding attachment layers 16, 16a, 16b, and 16c may vary further. In one embodiment, the fire-retarding attachment layers 16, 16a, 16b, and 16c may comprise one or more fire-retarding attachment members which are used to attach layers. The fire-retarding attachment members may comprise fire-retarding fasteners, fire-retarding clamps, fire-retarding securement members, or other types of fire-retarding attachment members. In other embodiments, any of the layers of the fire-retarding apparatus 10 may be attached to one another through/using pressing, adhesives, tape, threads, screws, bolts, fasteners, rivets, staples, clamps, other mechanical members, or other attachment mechanisms.

The reinforcing layers 18 and 18a provide reinforcement and strength to the fire-retarding layer 22 to reduce the likelihood of the fire-retarding layer 22 tearing or disintegrating. The reinforcing layers 18 and 18a may be made of metal, non-metallic, ceramic, glass, composite, rubber, foam, Aramid, solid, fibrous material, or porous material. In other embodiments, the reinforcing layers 18 and 18a may be made of varying materials. In one embodiment, the reinforcing layers 18 and 18a have a fiber density of 1.0 to 5 gm/cm³, a fiber diameter of 3 to 20 micron (um), and a fiber tensile strength of 1.0 to 6.0 Gpa (Gigapascal) to provide strength. In other embodiments, the reinforcing layers 18 and 18a may be made of varying materials which provide strength and reinforcement. In other embodiments, instead of using separate reinforcing layers, reinforcing material may be embedded into the fire-retarding layer 22 to provide reinforcement and strength to the fire-retarding layer 22. The reinforcing material may comprise metal, non-metallic, ceramic, glass, composite, foam, rubber, or Aramid. In other embodiments, the reinforcing material may vary. Throughout this disclosure, any time the term "reinforcing" is used or a reference is made to reinforcement properties, the disclosure of this paragraph applies to the term.

The fluid-repelling layers 20 and 20a may provide fluid-repelling properties to reduce the likelihood of degradation of the fire-retarding layer 22 and prevent fluid absorption. For purposes of this disclosure, the term "fluid-repelling" is defined as preventing fluid from being absorbed by the base material. The fluid-repelling layers 20 and 20a may comprise silicone, a nano-coating, or another type of fluid-repelling material, coating, or spray. In one embodiment, the fluid-repelling layers 20 and 20a have a fluid repellency requirement to fluid proof test equivalent to or better than ASTM D-3393 (2009). In other embodiments, the fluid-repelling layers 20 and 2a may have varying fluid repellency. Throughout this disclosure, any time the term "fluid-repelling" is used or a reference is made to fluid-repelling properties, the disclosure of this paragraph applies to the term.

The fire-retarding layer 22 comprises a material which retards fire, which doesn't ignite and contains the fire, which prevents the fire from spreading or burning through, and which either suppresses the fire or extinguishes it through containment and/or lack of oxygen. The fire-retarding layer 22 may be made of metal, non-metallic, composite, ceramic, aerogel (organic and inorganic), xerogel (organic and inorganic), polyimide, (4, 4-Oxydiphenylene-Pyromellitmide), mineral wool, ceramic paste, ceramic coating, or an inorganic material. In other embodiments, the fire-retarding layer 22 may be made of varying materials, such as a high-temperature paste which is applied and cured, which have fire retarding properties equivalent to Underwriter Laboratories (UL) Rating of UL-94 V-0 (does not burn) and an operating temperature range between -100 degrees F (-73 degrees Celsius) to 3,600 degrees F (1982 degrees Celsius). In additional embodiments, the fire-retarding layer 22 may survive a fire of 2,000 degrees Fahrenheit minimum (1093 degrees Celsius) for 15 minutes without burning through and without burning the back or front sides. In still other embodiments, the fire-retarding attachment layer 22 may vary further.

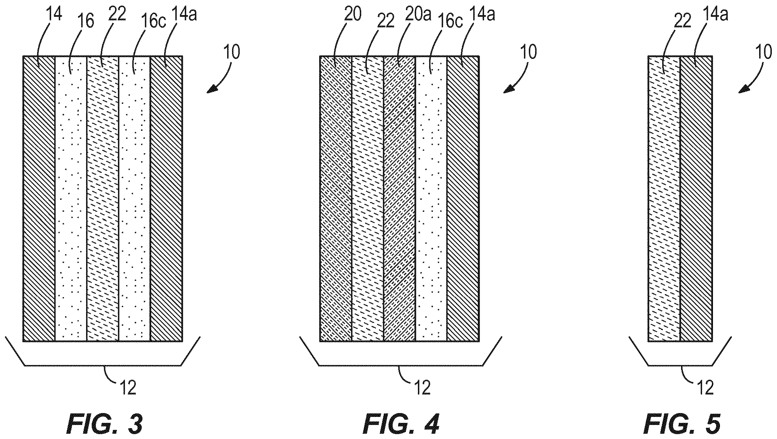

Figure 3 illustrates an example of a cross-section view through line 2-2 in the fire-retarding apparatus 10 of Figure 1. As shown, in this embodiment the fire-retarding apparatus 10 comprises a composite 12 which includes the following attached layers: face layer 14; fire-retarding attachment layer 16; fire-retarding layer 22; fire-retarding attachment layer 16c; and face layer 14a. Reinforcing layer 18, fire-retarding attachment layer 16a, fluid-repelling layer 20, fluid-repelling layer 20a, fire-retarding attachment layer 16b, and reinforcing layer 18a have been eliminated from the cross-sectional embodiment of Figure 2. In other embodiments, any of the layers may vary in order or number, one or more of the layers may not be present, or one or more additional layers may be used. In still other embodiments, the fire-retarding apparatus 10 may consist of any combination of the layers including all of the layers or taking away one or more of the layers.

Figure 4 illustrates still another example of a cross-section view through line 2-2 in the fire-retarding apparatus 10 of Figure 1. As shown, in this embodiment the fire-retarding apparatus 10 comprises a composite 12 which includes the following attached layers: fluid-repelling layer 20; fire-retarding layer 22; fluid-repelling layer 20a; fire-retarding attachment layer 16c; and face layer 14a. Face layer 14, fire-retarding attachment layer 16, reinforcing layer 18, fire-retarding attachment layer 16a, fire-retarding attachment layer 16b, and reinforcing layer 18a have been eliminated from the cross-sectional embodiment of Figure 2. In other embodiments, any of the layers may vary in order or number, one or more of the layers may not be present, or one or more additional layers may be used. In still other embodiments, the fire-retarding apparatus 10 may consist of any combination of the layers including all of the layers or taking away one or more of the layers.

Figure 5 illustrates yet another example of a cross-section view through line 2-2 in the fire-retarding apparatus 10 of Figure 1. As shown, in this embodiment the fire-retarding apparatus 10 comprises a composite 12 which includes the following attached layers: fire-retarding layer 22; and face layer 14a. Face layer 14, fire-retarding attachment layer 16, reinforcing layer 18, fire-retarding attachment layer 16a, fluid-repelling layer 20, fluid-repelling layer 20a, fire-retarding attachment layer 16b, reinforcing layer 18a, and fire-retarding attachment layer 16c have been eliminated from the cross-sectional embodiment of Figure 2. In other embodiments, any of the layers may vary in order or number, one or more of the layers may not be present, or one or more additional layers may be used. In still other embodiments, the fire-retarding apparatus 10 may consist of any combination of the layers including all of the layers or taking away one or more of the layers.

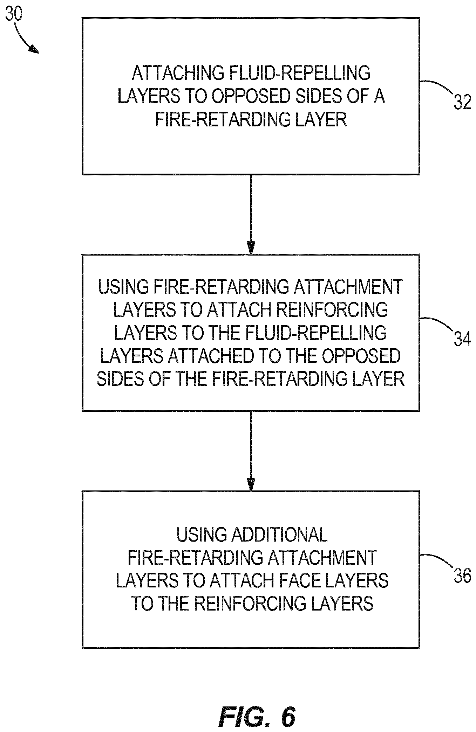

Figure 6 is a flowchart illustrating one embodiment of a method 30 of manufacturing a fire-retarding apparatus comprising a composite. The method may be varied to manufacture any of the embodiments of the fire-retarding apparatus disclosed herein, or varied further to manufacturing varying fire-retarding apparatus having a varying combination of layers. In step 32, fluid-repelling layers may be attached to opposed sides of a fire-retarding layer. In step 34, fire-retarding attachment layers may be used to attach reinforcing layers to the fluid-repelling layers attached to the opposed sides of the fire-retarding layer. In other embodiments, any of the layers may be attached to one another through/using pressing, adhesives, tape, threads, screws, bolts, fasteners, rivets, staples, clamps, other mechanical members, or other attachment mechanisms. In still other embodiments, rather than attaching fire-retarding attachment layers, a reinforcing material may be embedded within the fire-retarding layer. In step 36, additional fire-retarding attachment layers may be used to attach face layers to the reinforcing layers. Optionally, fluid-repelling layers may be attached to the face layers.

In other embodiments, one or more steps of the method 30 may be varied in substance or in order, one or more steps of the method 30 may not be followed, or one or more additional steps may be added to the method 30. In still other embodiments, the method 30 may be used to manufacture a fire-retarding apparatus having any of the layers varied in order or number, having one or more of the layers not being present, or having one or more additional layers. In additional embodiments, the method 30 may be used to manufacture a fire-retarding apparatus consisting of any combination of the layers including all of the layers or taking away one or more of the layers.

One or more embodiments of the disclosure may allow for composite apparatus to be made fire-retarding while keeping the fire-retarding composite apparatus low-weight. This is a significant advantage in the airline industry where low weight leads to greater fuel efficiency thereby saving cost.

## Claims

1. A fire-retarding apparatus (10) comprising a composite (12) comprising :
**a fire-retarding layer (22),**
**a first face layer (14),**
**a first fire-retarding attachment layer (16)** and a **second fire-retarding attachment layer (16a),** the first fire-retarding attachment layer (16) being attached to the first face layer (14) and attaching the first face layer (14) to the fire-retarding layer (22),
the composite further comprising :
**a first reinforcing layer (18)** attached to the first fire-retarding attachment layer (16), the second fire-retarding attachment layer (16a) being positioned adjacent to the first reinforcing layer (18),
**a first waterproof layer (20)** and **a second waterproof layer (20a),**
the first waterproof layer (20) being positioned adjacent to the second fire-retarding attachment layer (16a), wherein the first waterproof layer (20) comprises silicone, the first waterproof layer (20) preventing water from being absorbed by the fire retarding layer (22),
the fire retarding layer (22) having an operating temperature range between -73 degrees Celsius to 1982 degrees Celsius and being attached to the first waterproof layer (20), and
the second waterproof layer (20a) being positioned adjacent to the fire retarding layer (22), the second waterproof layer (20a) comprising silicone, and preventing water from being absorbed by the fire retarding layer (22).

2. The fire-retarding apparatus (10) of claim 1 wherein the fire-retarding layer (22) comprises metal, non-metallic, composite, ceramic, aerogel, xerogel, polyimide, mineral wool, (4, 4-Oxydiphenylene-pyromellitmide), ceramic paste, ceramic coating, or an inorganic material.

3. The fire-retarding apparatus (10) according to any of claims 1-2 further comprising a second face layer (14a), wherein the fire-retarding layer (22) is attached between the first face layer (14) and the second face layer (14a).

4. The fire-retarding apparatus (10) according to any of claims 1-3 wherein the fire-retarding layer (22) further comprises reinforcing material embedded in the fire-retarding layer (22).

5. The fire apparatus (10) according to any of claims 3-4, further comprising a third fire-retarding attachment layer (16b) attached to second waterproof layer (20a) a second reinforcing layer (18a) attached to the third fire-retarding attachment layer (16b), a fourth fire-retarding attachment layer (16c) attached to the second reinforcing layer (18a) and to the second face layer (14a).

6. A method of manufacturing a fire-retarding apparatus (10) comprising:
attaching a first fire-retarding attachment layer (16) to a first face layer (14),
attaching a first reinforcing layer (18) to the first fire-retarding attachment layer (16), and attaching a second fire-retarding attachment layer (16a) to the fist reinforcing layer (18),
attaching a first waterproof layer (20) to the second fire-retarding attachment layer (16a), wherein the first waterproof layer (20) comprises silicone, the first waterproof layer (20) preventing water from being absorbed by a fire retarding layer (22),
attaching **a fire-retarding layer (22)** to **the first waterproof layer (20),** the fire retarding layer (22) having an operating temperature range between -73 degrees Celsius to 1982 degrees Celsius, and
attaching a second waterproof layer (20a) to the fire retarding layer (22), to form a composite (12), the second waterproof layer (20a) comprising silicone, and preventing water from being absorbed by the fire retarding layer (22).

7. The method of claim 6 further comprising attaching a third fire-retarding attachment layer (16b) to the second waterproof layer (20a), a second reinforcing layer (18a) to the third fire-retarding attachment layer (16b), a fourth fire-retarding attachment layer (16c) to the second reinforcing layer (18a) and a second face layer (14a) to the fourth fire-retarding attachment layer (16c).

8. The method of claim 6 or 7 further comprising embedding a reinforcing material in the fire-retarding layer (22).

9. The method of any one of claims 6 to 8 further comprising the formed composite (12) weighing less than 0.5 gram per square centimeter (one pound per square foot) and having a thickness of less than 0.2 meters (eight inches).

10. The method of any one of claims 6 to 9 further comprising the formed composite (12) comprising a portion of an aircraft, a portion of a spacecraft, or a portion of a vehicle.

## Patentansprüche

1. Flammhemmende Vorrichtung (10), aufweisend einen Verbundwerkstoff (12), der aufweist:
eine flammhemmende Schicht (22),
eine erste Deckschicht (14),
eine erste flammhemmende Anbringungsschicht (16) und eine zweite flammhemmende Anbringungsschicht (16a), wobei die erste flammhemmende Anbringungsschicht (16) an der ersten Deckschicht (14) angebracht ist und die erste Deckschicht (14) mit der flammhemmenden Schicht (22) verbindet,
wobei der Verbundwerkstoff ferner aufweist:
eine erste Verstärkungsschicht (18), die an der ersten flammhemmenden Anbringungsschicht (16) angebracht ist, wobei die zweite flammhemmende Anbringungsschicht (16a) angrenzend an die erste Verstärkungsschicht (18) angeordnet ist,
eine erste wasserdichte Schicht (20) und eine zweite wasserdichte Schicht (20a),
wobei die erste wasserdichte Schicht (20) angrenzend an die zweite flammhemmende Anbringungsschicht (16a) angeordnet ist, die erste wasserdichte Schicht (20) Silikon aufweist, die erste wasserdichte Schicht (20) Wasser daran hindert, von der flammhemmenden Schicht (22) absorbiert zu werden,
die flammhemmende Schicht (22) einen Betriebstemperaturbereich zwischen -73 Grad Celsius bis 1982 Grad Celsius hat und an der ersten wasserdichten Schicht (20) angebracht ist, und
wobei die zweite wasserdichte Schicht (20a) angrenzend an die flammhemmende Schicht (22) angeordnet ist, die zweite wasserdichte Schicht (20a) Silikon aufweist und Wasser daran hindert, von der flammhemmenden Schicht (22) absorbiert zu werden.

2. Flammhemmende Vorrichtung (10) nach Anspruch 1, wobei die flammhemmende Schicht (22) aufweist: Metall, Nichtmetallenes, Verbundwerkstoff, Keramik, Aerogel, Xerogel, Polyimid, Mineralwolle, (4,4-Oxydiphenylene-pyromellitmide), keramische Paste, keramische Beschichtung oder ein anorganisches Material.

3. Flammhemmende Vorrichtung (10) nach einem der Ansprüche 1 bis 2, ferner aufweisend eine zweite Deckschicht (14a), wobei die flammhemmende Schicht (22) zwischen der ersten Deckschicht (14) und der zweiten Deckschicht (14a) angebracht ist.

4. Flammhemmende Vorrichtung (10) nach einem der Ansprüche 1 bis 3, wobei die flammhemmende Schicht (22) ferner in der flammhemmenden Schicht (22) eingebettetes Verstärkungsmaterial aufweist.

5. Flammhemmende Vorrichtung (10) nach einem der Ansprüche 3 bis 4, ferner aufweisend:
eine an der zweiten wasserdichten Schicht (20a) angebrachte dritte flammhemmende Anbringungsschicht (16b),
eine an der dritten flammhemmenden Anbringungsschicht (16b) angebrachte zweite Verstärkungsschicht (18a),
eine an der zweiten Verstärkungsschicht (18a) und der zweiten Deckschicht (14a) angebrachte vierte flammhemmende Anbringungsschicht (16c).

6. Verfahren zur Herstellung einer flammhemmenden Vorrichtung (10), aufweisend:
Anbringen einer ersten flammhemmenden Anbringungsschicht (16) an einer ersten Deckschicht (14),
Anbringen einer ersten Verstärkungsschicht (18) an der ersten flammhemmenden Anbringungsschicht (16) und Anbringen einer zweiten flammhemmenden Anbringungsschicht (16a) an der ersten Verstärkungsschicht (18),
Anbringen einer ersten wasserdichten Schicht (20) an der zweiten flammhemmenden Anbringungsschicht (16a), wobei die erste wasserdichte Schicht (20) Silikon aufweist, die erste wasserdichte Schicht Wasser (20) daran hindert, von einer flammhemmenden Schicht (22) absorbiert zu werden,
Anbringen einer flammhemmenden Schicht (22) an der ersten wasserdichten Schicht (20), wobei die flammhemmende Schicht (22) einen Betriebstemperaturbereich zwischen -73 Grad Celsius bis 1982 Grad Celsius hat, und
Anbringen einer zweiten wasserdichten Schicht (20a) an der flammhemmenden Schicht (22), um einen Verbundwerkstoff (12) zu bilden, wobei die zweite wasserdichte Schicht (20) Silikon aufweist und Wasser daran hindert, von der flammhemmenden Schicht (22) absorbiert zu werden.

7. Verfahren nach Anspruch 6, ferner aufweisend:
Anbringen einer dritten flammhemmenden Anbringungsschicht (16b) an der zweiten wasserdichten Schicht (20a), einer zweiten Verstärkungsschicht (18a) an der dritten flammhemmenden Anbringungsschicht (16b), einer vierten flammhemmenden Anbringungsschicht (16c) an der zweiten Verstärkungsschicht (18a) und einer zweiten Deckschicht (14a) an der vierten flammhemmenden Anbringungsschicht (16c).

8. Verfahren nach Anspruch 6 oder 7, ferner aufweisend:
Einbetten eines Verstärkungsmaterials in die flammhemmende Schicht (22).

9. Verfahren nach einem der Ansprüche 6 bis 8, wobei ferner der gebildete Verbundwerkstoff (12) weniger als 0,5 Gramm pro Quadratzentimeter (ein Pfund pro Quadratfuß) wiegt und hat eine Dicke von weniger als 0,2 Meter (acht Inch) hat.

10. Verfahren nach einem der Ansprüche 6 bis 9, wobei ferner der gebildete Verbundwerkstoff (12) einen Abschnitt eines Luftfahrzeugs, einen Abschnitt eines Raumfahrzeugs oder einen Abschnitt eines Fahrzeugs aufweist.

## Revendications

1. Appareil ignifugé (10) comprenant un composite (12) comprenant :
une couche ignifuge (22),
une première couche de face (14),
une première couche de fixation ignifuge (16) et une deuxième couche de fixation ignifuge (16a), la première couche de fixation ignifuge (16) étant fixée à la première couche de face (14) et fixant la première couche de face (14) à la couche ignifuge (22),
le composite comprenant en outre :
une première couche de renfort (18) fixée à la première couche de fixation ignifuge (16), la deuxième couche de fixation ignifuge (16a) étant positionnée adjacente à la première couche de renfort (18),
une première couche imperméable (20) et une seconde couche imperméable (20a),
la première couche imperméable (20) étant positionnée adjacente à la deuxième couche de fixation ignifuge (16a), dans lequel la première couche imperméable (20) comprend de la silicone, la première couche imperméable (20) empêchant de l'eau d'être absorbée par la couche ignifuge (22),
la couche ignifuge (22) ayant une plage de températures de fonctionnement entre - 73 degrés Celsius et 1982 degrés Celsius et étant fixée à la première couche imperméable (20), et
la seconde couche imperméable (20a) étant positionnée adjacente à la couche ignifuge (22), la seconde couche imperméable (20a) comprenant de la silicone, et empêchant de l'eau d'être absorbée par la couche ignifuge (22).

2. Appareil ignifugé (10) selon la revendication 1 dans lequel la couche ignifuge (22) comprend un métal, un non-métallique, un composite, une céramique, un aérogel, un xérogel, un polyimide, une laine minérale, du (4, 4-oxydiphénylène-pyromellitimide), une pâte céramique, un revêtement céramique, ou un matériau inorganique.

3. Appareil ignifugé (10) selon l'une quelconque des revendications 1 et 2 comprenant en outre une seconde couche de face (14a), dans lequel la couche ignifuge (22) est fixée entre la première couche de face (14) et la seconde couche de face (14a).

4. Appareil ignifugé (10) selon l'une quelconque des revendications 1 à 3 dans lequel la couche ignifuge (22) comprend en outre un matériau de renfort incorporé dans la couche ignifuge (22).

5. Appareil de feu (10) selon l'une quelconque des revendications 3 et 4, comprenant en outre une troisième couche de fixation ignifuge (16b) fixée à la seconde couche imperméable (20a), une seconde couche de renfort (18a) fixée à la troisième couche de fixation ignifuge (16b), une quatrième couche de fixation ignifuge (16c) fixée à la seconde couche de renfort (18a) et à la seconde couche de face (14a).

6. Procédé de fabrication d'un appareil ignifugé (10) comprenant :
la fixation d'une première couche de fixation ignifuge (16) à une première couche de face (14),
la fixation d'une première couche de renfort (18) à la première couche de fixation ignifuge (16), et la fixation d'une deuxième couche de fixation ignifuge (16a) à la première couche de renfort (18),
la fixation d'une première couche imperméable (20) à la deuxième couche de fixation ignifuge (16a), dans lequel la première couche imperméable (20) comprend de la silicone, la première couche imperméable (20) empêchant de l'eau d'être absorbée par une couche ignifuge (22),
la fixation d'une couche ignifuge (22) à la première couche imperméable (20), la couche ignifuge (22) ayant une plage de températures de fonctionnement entre - 73 degrés Celsius et 1982 degrés Celsius, et
la fixation d'une seconde couche imperméable (20a) à la couche ignifuge (22), pour former un composite (12), la seconde couche imperméable (20a) comprenant de la silicone, et empêchant de l'eau d'être absorbée par la couche ignifuge (22).

7. Procédé selon la revendication 6 comprenant en outre la fixation d'une troisième couche de fixation ignifuge (16b) à la seconde couche imperméable (20a), d'une seconde couche de renfort (18a) à la troisième couche de fixation ignifuge (16b), d'une quatrième couche de fixation ignifuge (16c) à la seconde couche de renfort (18a) et d'une seconde couche de face (14a) à la quatrième couche de fixation ignifuge (16c).

8. Procédé selon la revendication 6 ou 7 comprenant en outre l'incorporation d'un matériau de renfort dans la couche ignifuge (22).

9. Procédé selon l'une quelconque des revendications 6 à 8 comprenant en outre le composite (12) formé pesant moins de 0,5 gramme par centimètre carré (une livre par pied carré) et ayant une épaisseur de moins de 0,2 mètre (huit pouces).

10. Procédé selon l'une quelconque des revendications 6 à 9 comprenant en outre le composite (12) formé comprenant une partie d'un aéronef, une partie d'un engin spatial, ou une partie d'un véhicule.
